# EUROPÄISCHE PATENTANMELDUNG

(11) **EP 1 291 616 A2**
(43) Veröffentlichungstag der Anmeldung: **12.03.2003**
(21) Anmeldenummer: 02017948.7
(22) Anmeldetag: 09.08.2002
(51) Int. Cl.: G01B 11/00

(54) **Anordnung zum Erfassen von Relativbewegungen zweier Objekte**

(30) Priorität: 05.09.2001 DE 10143489
(71) Anmelder: Deutsches Zentrum für Luft- und Raumfahrt e.V., 51147 Köln (DE)
(72) Erfinder: Meusel, Peter, Dipl.-Ing., 82256 Fürstenfeldbruck (DE); Dietrich, Johannes, Dipl.-Ing., 82205 Gilching (DE); Gombert, Bernd, Dipl.-Ing., 82284 Grafrath (DE)
(74) Vertreter: Schmidt, Steffen J., Dipl.-Ing.

(57) **Zusammenfassung**

Eine Anordnung zum Erfassen von Relativbewegungen zweier Objekte mit vier Messzellen als Vertikalmesseinrichtung zum Erfassen einer Relativbewegung senkrecht zu einer gedachten Ebene, wobei die Messzellen so angeordnet sind, dass ihre senkrechten Projektionen auf die Ebene in gleichem Winkelabstand voneinander um ein Zentrum herum angeordnet sind. Außerdem ein mit dieser Anordnung ausgerüsteter Kraft- und/oder Momentensensor mit einer ersten und einer zweiten Platte, die elastisch miteinander verbunden und relativ zueinander bewegbar sind.

## Beschreibung

### HINTERGRUND DER ERFINDUNG

Die vorliegende Erfindung betrifft eine Anordnung zum Erfassen von Relativbewegungen zweier Objekte sowie einen Kraft- und/oder Momentensensor, der sich einer solchen Anordnung bedient. Ferner betrifft die Erfindung Verwendungsmöglichkeiten des Kraft- und/oder Momentensensors.

### STAND DER TECHNIK

Im Stand der Technik sind sowohl Anordnungen zum Erfassen von Relativbewegungen zweier Objekte als auch Kraft- und Momentensensoren in einer Vielzahl von Ausgestaltungen bekannt.

DE 36 11 336 C2 offenbart einen Kraft- und Drehmomentfühler, der alle sechs möglichen Kraft- und Drehmoment-Komponenten im kartesischen Koordinatensystem mit Hilfe von Dehnungsmessstreifen misst. Die Vorrichtung besteht aus zwei übereinander angeordneten Speichenrädern mit jeweils vier Speichen und insgesamt 20 Dehnungsmessstreifen, die miteinander verdrahtet sind. Der komplizierte Aufbau des Fühlers führt zu einem hohen Material- und Konstruktionsaufwand. Auch ist die Steifigkeit der Anordnung begrenzt, was viele, insbesondere industrielle Anwendungen, ausschließt.

Aus EP 0 240 023 B1 ist eine in einer Kunststoffkugel untergebrachte optoelektronische Anordnung bekannt, in der gleichzeitig sechs Komponenten, nämlich drei Verschiebungen und drei Winkeldrehungen eingegeben werden können. Die Anordnung hat den Vorteil eines einfachen Aufbaus, da sie mit nur sechs in gleichen Winkelabständen voneinander in einer einzigen Ebene angebrachten Messzellen auskommt. Dabei messen drei Messzellen Bewegungen in einer Ebene und drei weitere Messzellen Bewegungen senkrecht zu dieser Ebene. Der Einsatz von optoelektronischen Messzellen stellt Reproduzierbarkeit, Zuverlässigkeit und weitgehende Verschleißfreiheit sicher. Allerdings müssen aus den sechs Messwerten der Messzellen mittels eines Mikrocontrollers die korrespondierenden sechs Verschiebungen und Winkeldrehungen in kartesischen Koordinaten erst errechnet werden, was zusätzlichen Aufwand erfordert. Je nach der von dem Mikrocontroller verarbeiteten Datenwortbreite können außerdem Rundungsfehler auftreten, so dass die Präzision der Ergebniswerte unterhalb der ursprünglichen Messwerte liegt.

Die vorangemeldete nachveröffentlichte DE 100 34 569.7 A1 offenbart eine Einrichtung zum Erfassen von Relativbewegungen eines Objekts, die im wesentlichen von der optoelektronischen Anordnung aus EP 0 240 023 B1 Gebrauch macht. Die Einrichtung eignet sich insbesondere zum Erfassen hoher Kräfte und Drehmomente, wie sie häufig in industriellen Anwendungen auftreten. Zu diesem Zweck weist die Einrichtung ein zwischen einem Eingangs- und einem Ausgangsflansch angeordnetes Zwischenteil aus einem Elastomer oder Gießharz auf. Obwohl diese Einrichtung bereits hohe Kräfte und Drehmomente aufnehmen kann, ist kein Schutz gegen Überlast vorgesehen, die zur Zerstörung der Einrichtung, insbesondere der optoelektronischen Anordnung führen kann. Das Zwischenteil ist dem größten Verschleiß unterworfen. Jedoch ist keine Einrichtung vorgesehen, die den Anwender über einen möglichen Bruch des Zwischenteils informiert, oder diesen kompensiert. Im übrigen hat diese Einrichtung die gleichen Nachteile wie die aus der EP 0 240 023 B1 bekannte Anordnung.

Weitere Dokumente ohne Anspruch auf Vollständigkeit, die den technischen Hintergrund für die Erfindung zeigen, sind:
DE 32 40 241, DE 27 27 704, US-A-3 921 445, US-A-3 628 394.

### DER ERFINDUNG ZUGRUNDLIEGENDES PROBLEM

In der Vergangenheit haben sich vor allem die auf optoelektronischen Anordnungen basierenden Systeme mit sechs Messzellen in vielen industriellen Anwendungen sowie der Forschung und Entwicklung durchgesetzt, weil sich mit relativ geringem Aufwand die geforderten Leistungen erzielen lassen. Mit dem technischen Fortschritt in den Anwendungsgebieten sind jedoch auch die Anforderungen an Präzision und Geschwindigkeit der Messsysteme gestiegen. Mit Geschwindigkeit ist hier die Anzahl der Messungen gemeint, die innerhalb eines bestimmten Zeitintervalls ausgeführt werden können. Sie ist insbesondere durch die Geschwindigkeit des Mikrocontrollers und das darauf ablaufende Programm bestimmt. Neben höherer Leistung ist gleichzeitig ein möglichst niedriger Preis gefordert.

Ausgehend von dem Stand der Technik liegt somit der vorliegenden Erfindung die Aufgabe zugrunde, eine Anordnung zum Erfassen von Relativbewegungen zweier Objekte zu schaffen, die mit einem möglichst geringen Material- und Konstruktionsaufwand die gestiegenen Anforderungen an Präzision und Geschwindigkeit erfüllt. Darüber hinaus liegt der Erfindung die Aufgabe zugrunde, einen Kraft- und/oder Momentensensor zu schaffen, der ebenfalls mit möglichst geringem Material- und Konstruktionsaufwand die gestiegenen Anforderungen an Präzision und Geschwindigkeit erfüllt.

### ERFINDUNGSGEMÄSSE LÖSUNG

Zum Erfüllen dieser Aufgabe lehrt die Erfindung eine Anordnung zum Erfassen von Relativbewegungen zweier Objekte, die durch die Merkmale des Anspruchs 1 definiert ist. Sie lehrt außerdem einen Kraft- und/oder Momentensensor, der durch die Merkmale des Anspruchs 10 definiert ist.

### AUFBAU UND WEITERBILDUNG DER ERFINDUNGSGEMÄSSEN LÖSUNG

Ausgehend vom oben genannten Stand der Technik, insbesondere der sich in der Praxis als am günstigsten erwiesenen Anordnung aus nur sechs optoelektronischen Messzellen, liegt es nahe, die gestiegenen Anforderungen an Präzision und Geschwindigkeit auf der Basis dieser Anordnung durch die Auswahl entsprechen hochwertiger Komponenten, insbesondere präziserer Messzellen und eines schnelleren Mikrocontrollers, zu erfüllen.

Gemäß der vorliegenden Erfindung wird jedoch ein abweichender Weg verfolgt. Statt der üblichen drei werden vier Messzellen als Vertikalmesseinrichtung zum Erfassen einer Relativbewegung senkrecht zu einer gedachten Ebene eingesetzt, wobei die Messzellen so angeordnet sind, dass ihre senkrechten Projektionen auf die Ebene in gleichem Winkelabstand voneinander um ein Zentrum herum angeordnet sind. Zu erwarten wäre, dass diese kompliziertere Lösung höhere Kosten verursacht als die bekannte Lösung, da sowohl die Anzahl von Komponenten auch der Konstruktionsund Herstellungsaufwand steigen.

Überraschenderweise ist die Lösung jedoch deutlich günstiger, weil sich bei gleicher Präzision und Geschwindigkeit deutlich preiswertere Komponenten einsetzen lassen, was die obigen Kostennachteile überkompensiert. Die Ursache ist, dass neben der durch die größere Zahl von Messzellen begründeten Präzisionszunahme ein weiterer Effekt ausgenutzt werden kann. Denn da die vier Messzellen durch ihre Anordnung bereits entlang kartesischer Koordinaten ausgerichtet sind, wird die Umrechnung in kartesische Koordinaten im Mikrocontroller überflüssig, und die damit verbundenen Präzisions- und Geschwindigkeitsnachteile entfallen.

Die vorliegende Erfindung nutzt weiterhin aus, dass bei vielen Messaufgaben Kräfte in zwei zueinander senkrechten Hauptrichtungen zu messen sind. Die erfindungsgemäße Vorrichtung weist eine besonders hohe Messgenauigkeit in solchen Richtungen auf, entlang derer die Messzellen angeordnet sind. Da durch die Verwendung von vier Messzellen diese Richtungen ebenfalls senkrecht zueinander stehen, lässt sich eine besonders präzise Messung einfach dadurch erreichen, dass die Messzellen entlang der Hauptrichtungen angeordnet werden.

In einer bevorzugten Ausführung ist die erfindungsgemäße Anordnung zu einer Anordnung zum Messen aller sechs Bewegungs- und Drehrichtungen weitergebildet, indem vier weitere Messzellen als Horizontalmesseinrichtung zum Erfassen einer Relativbewegung in der Ebene vorgesehen sind, wobei die Messzellen so angeordnet sind, dass ihre senkrechten Projektionen auf die Ebene im gleichen Winkelabstand voneinander um ein Zentrum herum angeordnet sind. Jede Messzellen der Horizontalmesseinrichtung misst Bewegungen die in der Ebene senkrecht zu der Vorzugsrichtung die durch die jeweilige Messzelle und das Zentrum verläuft. Der Begriff "Vorzugsrichtung" ist wie folgt definiert:

Eine Vorzugsrichtung einer Horizontal- oder Vertikalmesseinrichtung ist durch einen gedachten Pfeil gegeben, der in einer Ebene liegt, in bzw. senkrecht zu der die Messzellen der Horizontal- bzw. Vertikalmesseinrichtung Relativbewegungen erfassen. Dabei geht der Pfeil von der senkrechten Projektion einer Messzelle auf diese Ebene aus und zeigt auf das Zentrum, um welches die Projektionen der Messeinrichtungen in gleichem Winkelabstand voneinander angeordnet sind.

Eine besonders kompakte Bauweise kann erreicht werden, indem alle Messzellen um ein gemeinsames Zentrum herum in gleichem Abstand von diesem angeordnet sind. Mit anderen Worten, alle Messzellen liegen auf einem gemeinsamen Kreisumfang.

Die vier jeweils um 90° versetzten Messzellen der Vertikalmesseinrichtung messen Bewegungen in Z-Richtung und die Drehungen A und B um die X- bzw. Y-Achse. Die dazwischen auch jeweils um 90° versetzt angeordneten Messzellen der Horizontalmesseinrichtung messen die Bewegungen in X- und Y-Richtung und die Drehungen C um die Z-Achse. Ein eingebauter Mikrocontroller kann die in Zylinderkoordinaten anfallenden Bewegungswerte (U1... U8) mit einer einfachen Transformation in kartesische Werte umrechnen:

| | | | | | | | | | | | |
|---|---|---|---|---|---|---|---|---|---|---|---|
| X | | 0 | +(1-1/32) | 0 | -1/4 | 0 | -(1- | 0 | +1/4 | | |
| | | | | | | | 1/32) | | | | U1 |
| Y | | 0 | -1/4 | 0 | -(1-1/32) | 0 | | 0 | +(1- | | U2 |
| | | | | | | | +1/4 | | 1/32) | | U3 |
| Z | | +1 | 0 | +1 | 0 | +1 | | +1 | | | U4 |
| | = | | | | | | 0 | | 0 | x | |
| A | | -1 | 0 | 0 | 0 | +1 | | 0 | | | U5 |
| | | | | | | | 0 | | 0 | | U6 |
| B | | 0 | 0 | -1 | 0 | 0 | | +1 | | | U7 |
| | | | | | | | 0 | | 0 | | U8 |
| C | | 0 | -1 | 0 | -1 | 0 | | 0 | | | |
| | | | | | | | -1 | | -1 | | |

Hierbei sind, jeweils im Urzeigersinn, U1, U3, U5 und U7 die Messwerte der Messzellen der Vertikalmesseinrichtung und U2, U4, U6 und U8 die Messwerte der Messzellen der Horizontalmesseinrichtung. X, Y und Z sind die Verschiebungen entlang der entsprechenden Achsen, A, B und C die Drehungen um diese Achsen.

Weiter sind die Messzellen so angeordnet, dass mindestens eine Vorzugsrichtung der Horizontalmesseinrichtung mit mindestens einer Vorzugsrichtung der vertikalen Messeinrichtung einen Winkel zwischen 14° und 15°, bevorzugt 14,4°, einschließt.

Wie sich erwiesen hat, kann sich durch Auswahl dieses Winkels, gegenüber allen anderen Winkeln eine weitere erhebliche Reduzierung des Rechenaufwands erreicht werden, der notwendig ist, um die Messergebnisse der Horizontal- und der Vertikalmesseinrichtung mit Hilfe eines Mikrocontrollers in ein gemeinsames kartesisches Koordinatensystem zu transformieren. Dabei wird die Eigenschaft des 14,4°-Winkels ausgenutzt, dass sich sowohl sein Sinus, als auch sein Kosinus sehr präzise durch vielfache von 1/32 ausdrücken lassen. Speziell gilt arccos (1 - 1/32) ist gleich 14,36° und arcsin (1/4) ist gleich 14,48°.

Mit diesen Werten müssen die Messwerte der Horizontalmesseinrichtung multipliziert werden, um sie in das Koordinatensystem der Vertikalmesseinrichtung zu transformieren. Multiplikationen mit 1/4 bzw. 1/32 bzw. Divisionen durch 4 bzw. 32 sind sehr schnell durch bitweises Schieben zu realisieren.

Durch die erfindungsgemäße Anordnung der Messzellen können die Werte U1 bis U8 mittels der obigen Matrix sehr einfach in die Translationen X, Y und Z und die Rotationen A, B und C umgerechnet werden, da die Matrix nur Faktoren mit einfach zu verarbeitenden Beträgen von 1, 1/4, 1-1/32 und 0 enthält.

Als Messzellen zum Erfassen von Relativbewegungen senkrecht bzw. waagrecht zur gedachten Ebene werden bevorzugt optoelektronische Anordnungen gewählt. Sie umfassen als erstes Element einen im Strahlengang einer Lichtemissionseinrichtung angeordneten positionsempfindlichen Detektor (PSD), bevorzugt einen positionsempfindlichen Infrarotdetektor. Als zweites Elemente umfassen die optoelektronischen Anordnungen einen im Strahlengang der Lichtemissionseinrichtung zwischen der Lichtemissionseinrichtung und dem positionsempfindlichen Detektor angeordnete Schlitzblende, so dass nur ein schmaler Lichtbalken auf den dahinterliegenden PSD fällt. Die Schlitzblenden der Messzellen der Horizontalmesseinrichtung verlaufen senkrecht zur Ebene, die Schlitzblenden der Messzellen der vertikalen Messeinrichtung verlaufen parallel zur Ebene.

Bevorzugt ist jeder Messzelle eine eigene Lichtemissionseinrichtung, bevorzugt in Form einer Infrarot-Leuchtdiode (ILED) zugeordnet, die radial zum Kreisumfang hin leuchtet. Dort stehen den ILEDs die PSDs gegenüber. Der Strahlengang verläuft also jeweils in einer vom Zentrum ausgehenden Richtung.

Dadurch, dass jeder Messzelle eine eigene Lichtemissionseinrichtung zugeordnet ist, kann das Ausgangssignal der positionsempfindlichen Detektoren verwendet werden, um die Ströme der ihnen jeweils zugeordneten Lichtemissionseinrichtung so zu regeln, dass auf jeden positionsempfindlichen Detektor die gleiche konstante Lichtmenge auftrifft. Das hat den Vorteil, dass alle sechs Meßsysteme in weiten Bereichen unbeeinflusst von Temperatur- und Alterungseinflüssen sowie Verschmutzung und Bauteiltoleranzen sind.

Um Relativbewegungen messen zu können, muss jeweils eine Komponente des Systems Lichtemissionseinrichtung, Schlitzblende, Detektor relativ zu den anderen beiden Elementen bewegbar sein. In der bevorzugten Ausführung sind die Lichtemissionseinrichtung und positionsempfindlicher Detektor fest auf einer Leiterplatte angebracht, während die Schlitzblende relativ dazu beweglich ist. Das hat den Vorteil, dass alle elektronischen Komponenten auf einer einzigen Leiterplatte (Messplatte) untergebracht werden können.

Der erfindungsgemäße Kraft- und/oder Momentensensor umfasst eine erste und eine zweite Platte, wobei die erste und die zweite Platte elastisch miteinander verbunden und relativ zueinander bewegbar sind. Er umfasst außerdem die erfindungsgemäße Anordnung zum Erfassen von Bewegungen der ersten und zweiten Platte relativ zueinander. Dabei sind die Platten bevorzugt Leiterplatten, wobei die erste Platte (Messplatte) alle elektronischen Komponenten, insbesondere die Lichtemissionseinrichtungen und die positionsabhängigen Detektoren, Steuerelektronik zum Regeln der Ströme der Lichtemissionseinrichtungen, gegebenenfalls Verstärker, einen Digitalteil zur Datenumwandlung, ein Netzteil zur Stromversorgung und/oder andere Einrichtungen trägt. Durch Anordnen aller elektronischen Komponenten auf nur einer Leiterplatte wird der Bestückungsaufwand bei der Herstellung deutlich reduziert. Die Leiterplatten bestehen bevorzugt aus 2 mm dickem mehrlagigem Glasfaser-Epoxidharzmaterial.

Die beiden Platten sind durch mindestens eine Federeinrichtung oder Feder- und Dämpfungseinrichtung, bevorzugt aus einer der nachfolgenden Komponenten oder Kombinationen daraus, verbunden: Schraubenfeder, Federpaket, Elastomer, Gießharz. Diese Federeinrichtungen oder Feder- und Dämpfungseinrichtungen nehmen die Kräfte und Drehmomente auf. Kennt man ihre elastischen Eigenschaften, lassen sich aus den relativen Positionen der beiden Platten die auf die beiden Platten relativ zueinander wirkenden Kräfte und Drehmomente messen.

Bevorzugt sind die beiden Platten mittels vier oder einem vielfachen von vier Federeinrichtungen oder Feder- und Dämpfungseinrichtungen elastisch miteinander verbunden. Dabei sind die Federeinrichtungen oder Feder- und Dämpfungseinrichtungen bevorzugt um 90° oder 180° rotationssymmetrisch um das Zentrum angeordnet, um das auch die Messzellen angeordnet sind. Dies hat den Vorteil, dass im Kraft- und/oder Momentensensor immer symmetrische Kräfte wirken.

In einer bevorzugten Ausführung umfasst mindestens eine der Federeinrichtungen oder Feder- und Dämpfungseinrichtungen mindestens eine Schraubenfeder, die an ihren beiden gegenüberliegenden Enden durch Löten fest mit der ersten bzw. zweiten Platte verbunden ist. Die Schraubenfedern können so in alle Richtungen belastet werden, d. h. es können Zug- und Druckkräfte sowie quer zur Feder angreifende Kräfte wirken, ohne dass sich die Federn in ihrem Sitz bewegen oder gar herausspringen.

In einer bevorzugten Ausführung der Erfindung sind die Messzellen in Messmodule vereinzelt, die jeweils mindesten eine Messeinrichtung, bevorzugt ein Paar bestehend aus einer Zelle der Horizontal- und einer Zelle der Vertikalmesseinrichtung, umfassen. Eine der beiden Platten jedes Messmoduls (Messplatte) trägt außerdem die Steuerelektronik zum ansteuern der Messeinrichtungen. Die Messmodule eines erfindungsgemässen Kraft- und/oder Momentensensors mit solchem vereinzelten Aufbau umfassen darüber hinaus bevorzugt jeweils wenigstens eine Federeinrichtung. Durch die Vereinzelung in Messmodule lassen sich auch Vorrichtungen bzw. Sensoren mit sehr großem Durchmesser und entsprechend hoher Präzision realisieren, ohne dass entsprechend große Platinen benötigen werden. Die Messmodule werden stattdessen in entsprechendem Abstand um eine Zentrum herum angeordnet. Digitalteil zur Datenumwandlung und Netzteil können auf einer weiteren Platte (Basisplatte) untergebracht werden.

Darüber hinaus wird in einer bevorzugten Ausführung ein Strom durch die Federeinrichtung oder Feder- und Dämpfungseinrichtung geleitet und eine Unterbrechung des Stromflusses detektiert, wenn ein Bruch der Federeinrichtung oder Feder- und Dämpfungseinrichtung auftritt. In einer bevorzugten Ausführung sind Federeinrichtungen vorgesehen, die aus Paketen von Schraubenfedern bestehen, die durch Löten an ihren entgegensetzten Enden mit der einen bzw. der anderen Platte verbunden sind und durch die ein Strom geleitet wird. In einer bevorzugten Ausführung sind alle Federn in Reihe geschaltet, so dass beim Auftreten eines Federbruches in einer der Federn ein Signal an den Benutzer weitergeleitet werden kann. In einer anderen bevorzugten Ausführung sind alle Federn in Form einer Matrix verschaltet, so dass bei Federbruch genau festgestellt werden kann, welche Feder gebrochen ist, damit bei der Auswertung gegebenenfalls eine Korrektur für die defekte Feder vorgenommen werden kann und/oder der Benutzer genau informiert werden kann.

Eine bevorzugte Ausführung des Kraft- und/oder Momentensensors umfasst weiterhin mindestens eine Anschlageinrichtung, welche die Relativbewegung der beiden Platten zueinander in der Ebene und/oder senkrecht zur Ebene begrenzen. Dies ist vorzugsweise durch Anschlagbolzen realisiert, die fest mit einer Platte verbunden sind. Auf diese Weise wird der Kraft- und/oder Momentensensor gegen Überlast geschützt.

Aus der erfindungsgemäßen Ausgestaltung der Anordnung zum Erfassen von Relativbewegungen zweier Objekte ergeben sich folgende vorteilhafte Eigenschaften:
1. Hohe Präzision und hohe Messrate bei relativ geringem Material- und Konstruktionsaufwand.
2. Hohe Linearität, geringe Hysterese und weitgehende Verschleißfreiheit durch den Einsatz von optoelektronischen Messzellen.
3. Äußerst kompakte Bauweise.

Aus der erfinderischen Ausgestaltung des Kraft- und/oder Momentensensors ergeben sich zusätzlich zu den obengenannten noch folgende vorteilhafte Eigenschaften:
1. Hohe Überlastfestigkeit durch den Einsatz von Anschlageinrichtungen.
2. Hohe Zuverlässigkeit durch die Detektion von Federbrüchen.

Der erfindungsgemäße Kraft- und/oder Momentensensor eignet sich u.a. zur Messung von Aktions- und Reaktionskräften, z.B. auf KFZ-Messständen. Es lassen sich die erfassten Linearbewegungen und/oder Drehauslenkungen auch direkt in translatorische oder rotatorische Bewegungen umsetzen. Damit können beispielsweise Automaten, Roboter, Manipulatoren oder ähnliche Systeme gesteuert werden. Um beispielsweise die vertikale Ausrichtung eines Krans zu kontrollieren bzw. sich andeutende Kipp- oder Neigebewegungen festzustellen, kann dieser Kran auf eine entsprechend bemessene Plattform montiert werden, unter welcher wiederum drei, vier oder mehr der erfindungsgemäßen Kraft- und/oder Momentensensor angeordnet sind.

Eine weitere Einsatzmöglichkeit besteht darin, den Kraft- und/oder Momentensensor am Ende eines Roboterarms und beispielsweise einer von dem Roboter bewegten Halte- oder Greifvorrichtung anzubringen.

Dasselbe Ergebnis kann erreicht werden, wenn erfindungsgemäße Kraft- und/oder Momentensensoren unter einen Roboter gesetzt werden. Dadurch kann eine vom Roboter ausgeübte Kraft als Reaktionskraft gemessen werden und zusätzlich genau die Stelle festgestellt werden, an welcher die ausgeübte Kraft aufgebracht worden ist. Somit muss der erfindungsgemäße Kraft- und/oder Momentensensor nicht unbedingt in einem Robotergelenk oder unter einem Roboter angebracht werden, sonder kann bevorzugt über oder unter eine entsprechend dimensionierte Plattform montiert werden, unter welcher eine Anzahl von beispielsweise drei, vier oder mehr Einrichtungen mit jeweils einem Kraft- und/oder Momentensensor angeordnet sind um dann die jeweiligen Reaktionskräfte des Roboters zu erfassen und seinem Steuer und/oder Regelalgorithmus zuzuführen.

Weitere Merkmale, Eigenschaften, Vorteile und mögliche Abwandlungen werden für einen Fachmann anhand der nachstehenden Beschreibung einer bevorzugten Ausführung deutlich, in der auf die beigefügten Zeichnen Bezug genommen wird.

### KURZBESCHREIBUNG DER ZEICHNUNGEN

Figur 1 zeigt die erfindungsgemäße Anordnung zum Erfassen von Relativbewegungen zweier Objekte von oben mit Blickrichtung senkrecht auf die gedachte Ebene.
Figur 2 zeigt zwei Messzellen, in der bevorzugten Ausführung als optoelektronische Anordnungen mit ihnen jeweils zugeordneten Lichtemissionseinrichtungen.
Figur 3 zeigt einen erfindungsgemäßen Kraft- und Momentensensor in perspektivischer Ansicht.
Figur 4 zeigt in einem Schaltplanausschnitt die Beschaltung der Schraubenfedern in einer Matrix.

### AUSFÜHRLICHE BESCHREIBUNG EINES AUSFÜHRUNGSBEISPIELS

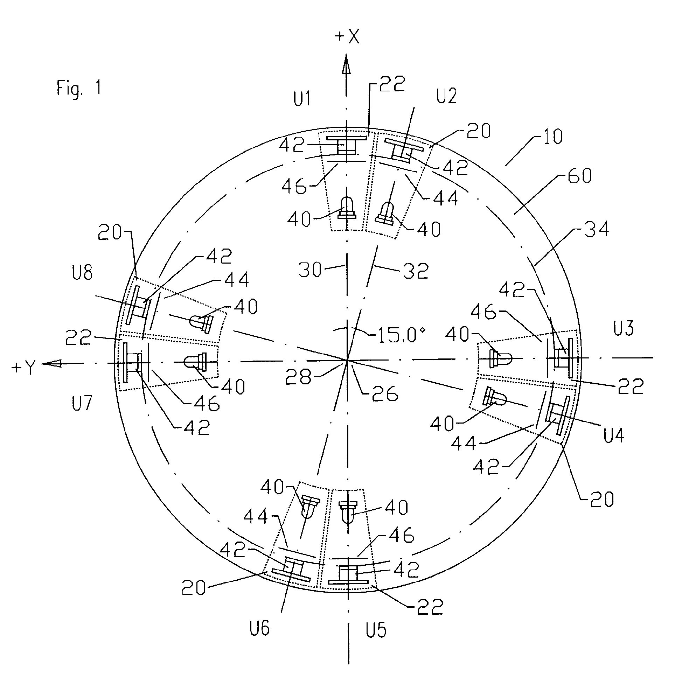

Wie in Figur 1 dargestellt, sind bei der erfindungsgemäßen Anordnung zum Erfassen von Relativbewegungen zweier Objekte die vier Messzellen der Vertikalmesseinrichtung 20 so um ein Zentrum 26 herum angeordnet, dass die senkrechten Projektionen der Messzellen 20 auf die gedachte Ebene 24 zu den Projektionen der ihnen benachbarten Messzellen der Vertikalmesseinrichtung 20 den gleichen Winkelabstand aufweisen. Die Projektionen sind also entlang eines orthogonalen Koordinatensystems ausgerichtet. Gleiches gilt für die Messzellen der Horizontalmesseinrichtung 22. Auch ihre Projektionen sind entlang der Richtungen eines orthogonalen Koordinatensystems in der Ebene ausgerichtet. Die Messzellen der Vertikalmessseinrichtung 20 und die Messzellen der Horizontalmesseinrichtung 22 sind weiter so angeordnet, dass mindestens eine Vorzugsrichtung der Vertikalmesseinrichtung 30 mit mindestens einer Vorzugsrichtung der Horizontalmesseinrichtung 32 einen Winkel von 14 bis 15°, nämlich 14,4° einschließt.

Die Messzellen der Vertikalmesseinrichtung messen an ihrem jeweiligen Ort in der Bewegungen senkrecht zu dieser Ebene, also in Blickrichtung der Figur 1. Die Messzellen der Horizontalmesseinrichtung 22 messen Bewegungen in der Ebene, und zwar senkrecht zu der Vorzugsrichtung 32, die durch die jeweilige Messzelle 22 verläuft.

Hierbei sind die Messzellen der Vertikalmesseinrichtung 20 und der Horizontalmesseinrichtung 22 so angeordnet, dass ihre senkrechten Projektionen auf die Ebene 24 auf dem Umfang eines Kreises 34 um das Zentrum 26, 28 herum liegen.

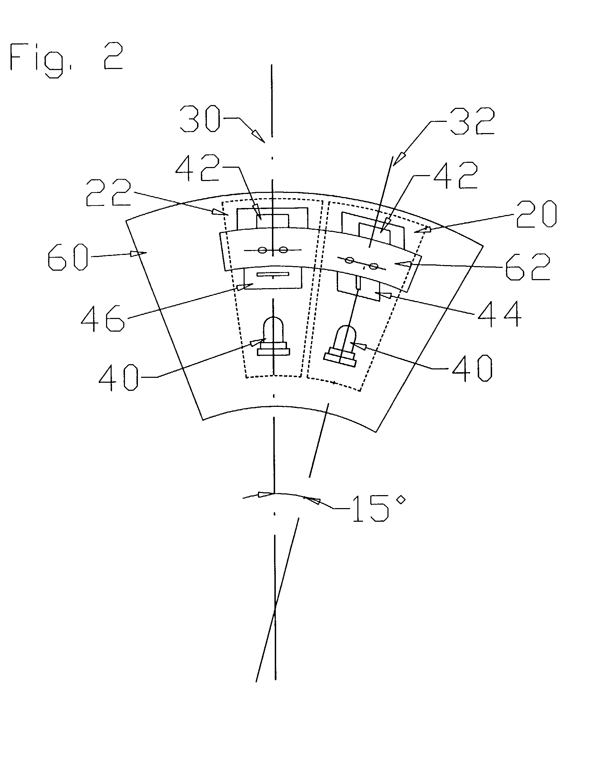

In Figur 2 ist der Messzellen 20, 22 in der bevorzugten Ausführung als optoelektronische Anordnungen im Detail dargestellt. Jede Anordnung umfasst einen positionsempfindlichen Infrarotdetektor 42, der im Strahlengang einer ILED 40 angeordnet ist. Im Strahlengang zwischen ILED 40 und positionsempfindlichem Infrarotdetektor 42 ist eine Schlitzblende 44, 46 angeordnet. ILED 40 und positionsempfindlicher Infrarotdetektor 42 auf einer gemeinsamen Leiterplatte befestigt, und die Blende 44, 46 ist relativ dazu bewegbar.

Die Lichtemissionseinrichtung ist in einem definierten Abstand von dem positionsempfindlichen Detektor 42 angebracht. Die Schlitzblende 44 bzw. 46 bewegt sich zwischen der Lichtemissionseinrichtung 40 und dem Detektor 42. Sie weist einen schmalen Schlitz auf, so dass nur ein schmaler Lichtstreifen auf den positionsempfindlichen Detektor 42 fällt. Der Schlitz, und damit der Lichtbalken, verläuft jeweils senkrecht zu der Messrichtung der Messzelle. Das heißt, der Schlitz der Schlitzblende 44 einer Messzelle 20 der Vertikalmesseinrichtung verläuft parallel zur Ebene 24, während der Schlitz der Schlitzblende 46 einer Messzelle 22 der Horizontalmesseinrichtung senkrecht zur Ebene 24 verläuft.

Sämtliche positionsempfindlichen Infrarotdetektoren 42 und ILEDs 40 sind zusammen mit den übrigen elektronischen Komponenten auf einer Leiterplatte 48 untergebracht.

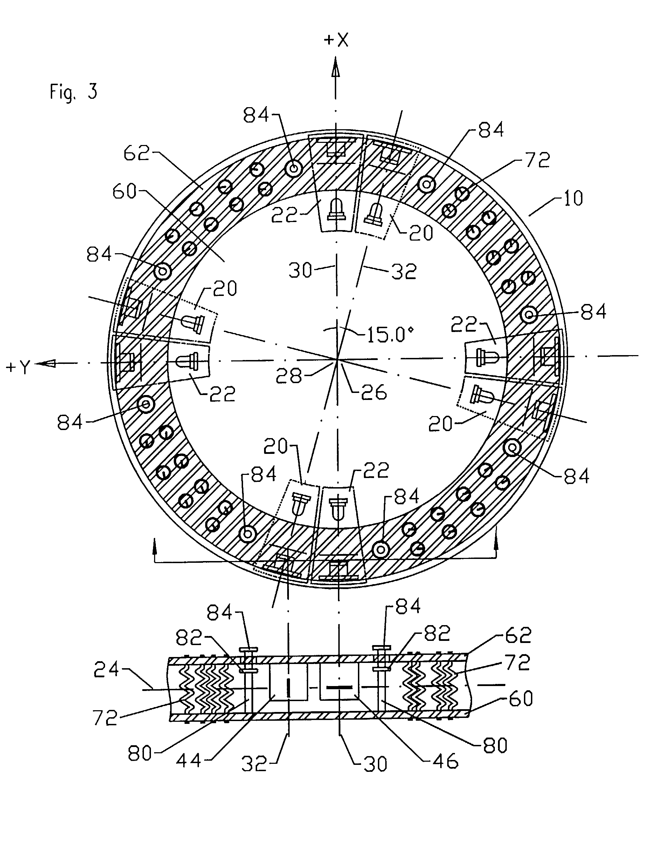

Figur 3 zeigt einen Kraft- und/oder Momentensensor gemäß der vorliegenden Erfindung. Er besteht aus einer ersten Platte 60 und einer zweiten Platte 62, die elastisch miteinander verbunden sind. Er ist mit der erfindungsgemäßen Anordnung zum Erfassen von Relativbewegungen zwischen der ersten Platte 60 und der zweiten Platte 62 ausgestattet. Bei der ersten Platte 60 handelt es sich um eine Leiterplatte, auf der die positionsempfindlichen Infrarotdetektoren 42 und die Infrarot-Leuchtdioden 40 fest verlötet sind. Sie trägt auch die übrigen elektronischen Komponenten. Die Schlitzblenden 44, 46 sind mit der zweiten Platte 62 durch Löten fest verbunden.

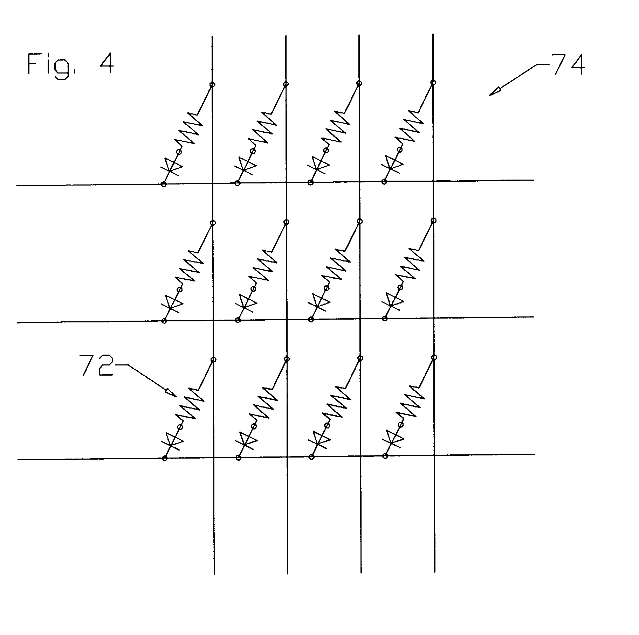

Federpakete aus Schraubenfedern 72 wirken als Federeinrichtungen, welche die erste Platte 60 und die zweite Platte 62 elastisch miteinander verbinden. Die Schraubenfedern 72 sind an ihrem einen Ende mit der ersten Platte 60 und an ihrem jeweils anderen Ende mit der zweiten Platte 62 verlötet. Es sind vier Federpakete vorgesehen, die jeweils zwischen den Paaren zweier am engsten benachbarter Messzellen 20, 22 der Vertikal- und Horizontalmesseinrichtung angeordnet sind. Durch jede Schraubenfeder 72 wird ein Strom geleitet. Bricht eine Schraubenfeder 72, wird die Unterbrechung des Stromes detektiert, um dem Benutzer einen Federbruch anzuzeigen und/oder den Federbruch bei der Berechnung der resultierenden Kräfte und Momente zu berücksichtigen. Damit identifiziert werden kann, welche Feder gebrochen ist, sind die Federn in einer Matrixschaltung 74 angeordnet, wie auf dem Schaltplan-Ausschnitt in Figur 4 dargestellt ist. Zu diesem Zweck ist auch die zweite Platte 62 als Leiterplatte ausgeführt.

Um zu detektieren, dass eine der Federn 72 gebrochen ist, können diese auch in Reihe geschaltet werden und der Stromfluss durch die Reihenschaltung überwacht werden.

Aus Stabilitätsgründen sind beide Leiterplatten in 2mm dickem mehrlagigem Glasfaser-Epoxidharzmaterial ausgeführt.

Um die Relativbewegungen der beiden Platten 60, 62 zu begrenzen, so dass durch Überlastung keine Beschädigung des Kraft- und/oder Momentensensors 50 auftreten kann, sind vier Anschlageinrichtungen 80 in Form von Anschlagbolzen vorgesehen. Die Anschlagbolzen sind fest mit der ersten Platte 60 verbunden und ragen durch Löcher in der zweiten Platte 62. Die Horizontalbewegung der zweiten Platte 62 relativ zur ersten Platte 60 ist durch den Durchmesser der Anschlagvorrichtungen 80 und den Durchmesser der Löcher in der zweiten Platte 62 bestimmt. Die Bewegung der beiden Platten 60, 62 zueinander ist durch Verdickungen 82, 84 an den bolzenförmigen Anschlagsvorrichtungen 80 begrenzt. Der Abstand der Verdickungen 82, 84 von der zweiten Platte 62 in Richtung senkrecht zur Ebene 24 bestimmt den Bereich, in dem die erste Platte 60 und die zweite Platte 62 in vertikaler Richtung relativ zueinander bewegt werden können.

## Patentansprüche

1. Anordnung zum Erfassen von Relativbewegungen zweier Objekte (10), **dadurch gekennzeichnet, dass** sie vier Messzellen (20) als Vertikalmesseinrichtung zum Erfassen einer Relativbewegung senkrecht zu einer gedachten Ebene (24) umfasst, wobei die Messzellen (20) so angeordnet sind, dass ihre senkrechten Projektionen auf die Ebene (24) in gleichem Winkelabstand voneinander um ein Zentrum (26) herum angeordnet sind.

2. Anordnung (10) nach Anspruch 1, **dadurch gekennzeichnet, dass** sie vier Messzellen (22) als Horizontalmesseinrichtung zum Erfassen einer Relativbewegung in der Ebene (24) umfasst, wobei die Messzellen (22) so angeordnet sind, dass ihre senkrechten Projektionen auf die Ebene (24) im gleichen Winkelabstand voneinander um ein Zentrum (28) herum angeordnet sind.

3. Anordnung (10) nach Anspruch 2, **dadurch gekennzeichnet, dass** mindestens eine Vorzugsrichtung der Horizontalmesseinrichtung mit mindestens einer Vorzugsrichtung der Vertikalmesseinrichtung ein Winkel zwischen 14° und 15° einschließt.

4. Anordnung (10) nach Anspruch 3, **dadurch gekennzeichnet, dass** mindestens eine Vorzugsrichtung der Horizontalmesseinrichtung mit mindestens einer Vorzugsrichtung der Vertikalmesseinrichtung einen Winkel von 14,4° einschließt.

5. Anordnung (10) nach einem der vorhergehenden Ansprüche, **dadurch gekennzeichnet, dass** die senkrechten Projektionen der Messzellen (20, 22) der Horizontalund der Vertikalmesseinrichtungen in der Ebene (24) auf dem Umfang (34) eines Kreises in gleichem Winkelabstand voneinander bezüglich des Mittelpunkts des Kreises liegen.

6. Anordnung (10) nach einem der vorhergehenden Ansprüche, **dadurch gekennzeichnet, dass**
es sich bei den Messzellen (20, 22) zum Erfassen von Relativbewegungen senkrecht- bzw. waagerecht zur gedachten Ebene (24) um optoelektronische Anordnungen handelt, die jeweils
als erstes Element einen im Strahlengang einer Lichtemissionseinrichtung (40) angeordneten positionsempfindlichen Detektor (42) sowie
als zweites Element eine im Strahlengang der Lichtemissionseinrichtung (40) zwischen der Lichtemissionseinrichtung (40) und dem positionsempfindlichen Detektor (42) angeordnete Schlitzblende (44, 46) umfassen,
wobei eine Detektorachse des positionsempfindlichen Detektors (42) senkrecht zu einer Schlitzrichtung der Schlitzblende (44, 46) ausgerichtet ist und ein Element des Systems bestehend aus Lichtemissionseinrichtung (40), Schlitzblende (44, 46) und Detektor (42) relativ zu den anderen beiden Elementen bewegbar ist.

7. Anordnung (10) nach Anspruch 6, **dadurch gekennzeichnet, dass** jeder Messzelle (20, 22) eine eigene Lichtemissionseinrichtung (40) zugeordnet ist.

8. Anordnung (10) nach Anspruch 6 oder 7, **dadurch gekennzeichnet, dass** bei jeder Messzelle (20, 22) die Schlitzblende (44, 46) relativ zum positionsempfindlichen Detektor (42) und der Lichtemissionseinrichtung (40) bewegbar ist.

9. Anordnung (10) nach Anspruch 6, 7 oder 8, **dadurch gekennzeichnet, dass** die positionsempfindlichen Detektoren (42) und die Lichtemissionseinrichtungen (40) wenigstens einer Messzelle (20,22) gemeinsam auf einer Leiterplatte (60) angeordnet sind.

10. Kraft- und/oder Momentensensor (50) mit
- einer ersten Platte (60) und
- einer zweiten Platte (62), wobei die erste Platte (60) und die zweite Platte (62) elastisch miteinander verbunden und relativ zueinander bewegbar sind, **gekennzeichnet durch** eine Einrichtung zum Erfassen vom Bewegungen der zweiten Platte (62) relativ zur ersten Platte (60) nach einem der Ansprüche 1 bis 9.

11. Kraft- und/oder Momentensensor (50) nach Anspruch 10, **dadurch gekennzeichnet, dass** die erste und die zweite Platte (60, 62) über mindestens eine Federeinrichtung oder Feder- und Dämpfungseinrichtung miteinander verbunden sind.

12. Kraft- und/oder Momentensensor (50) nach einem der Ansprüche 10 oder 11, **dadurch gekennzeichnet, dass** die mindestens eine Federeinrichtung oder Feder- und Dämpfungseinrichtung eine der nachfolgenden Komponenten oder Kombinationen daraus umfasst:
Schraubenfeder (72), Federpaket, Elastomer, Gießharz.

13. Kraft- und/oder Momentensensor (50) nach einem der Ansprüche 10 bis 12, **dadurch gekennzeichnet, dass** die erste und die zweite Platte (60, 62) mittels vier oder ein Vielfaches von vier, um 90° oder 180° rotationssymetrisch angeordnete Federeinrichtungen oder Feder- und Dämpfungseinrichtungen elastisch miteinander verbunden sind.

14. Kraft- und/oder Momentensensor (50) nach einem der Ansprüche 10 bis 13, **dadurch gekennzeichnet, dass** mindestens eine der Federeinrichtungen oder Federund Dämpfungseinrichtungen mindestens eine Schraubenfeder (72) umfasst, die durch Löten fest mit der ersten und zweiten Platte (60,62) verbunden ist.

15. Kraft- und/oder Momentensensor (50) nach einem der Ansprüche 11 bis 14, **gekennzeichnet durch** eine Einrichtung zum Erfassen eines Bruchs der Federeinrichtung oder Feder- und Dämpfungseinrichtung, die ein Unterbrechung eines Flusses eines Stroms **durch** die Federeinrichtung oder Feder- und Dämpfungseinrichtung detektiert, wenn ein Bruch der Federeinrichtung oder Feder- und Dämpfungseinrichtung auftritt.

16. Kraft- und/oder Momentensensor (50) nach einem der Ansprüche 10 bis 15, **gekennzeichnet durch** mindestens eine Anschlageinrichtung (80), welche die Relativbewegung in der Ebene (24) begrenzt.

17. Kraft- und/oder Momentensensor (50) nach einem der Ansprüche 10 bis 16, **gekennzeichnet durch** mindestens eine Anschlageinrichtung (80), welche die Relativbewegung senkrecht zur Ebene (24) begrenzt.

18. Kraft- und/oder Momentensensor (50) nach einem der Ansprüche 10 bis 17, **gekennzeichnet durch**
eine Basisplatte, auf dem ein Digitalteil zur Datenumwandlung und/oder ein Netzteil zur Spannungsversorgung angeordnet ist, und
mindestens ein Messmodul, das wenigstens eine Messplatte, eine Messzelle (20, 22) und eine Federeinrichtung oder Feder- und Dämpfungseinrichtung umfasst.
